# EUROPÄISCHE PATENTANMELDUNG

(11) **EP 0 937 489 A1**
(43) Veröffentlichungstag der Anmeldung: **25.08.1999**
(21) Anmeldenummer: 98810149.9
(22) Anmeldetag: 24.02.1998
(51) Int. Cl.: B01D 9/00

(54) **Vorrichtung zur Trennung eines Stoffgemisches mittels statischer fraktionierter Kristallisation**

(71) Anmelder: Sulzer Chemtech AG, 8404 Winterthur (CH)
(72) Erfinder: Bischof, Rudolf, 9475 Sevelen (CH)
(74) Vertreter: Riederer, Conrad A., Dr.

(57) **Zusammenfassung**

In einem Gehäuse (13) eines statischen Kristallisators (11) sind eine Kristallisationskammer (27) oben und eine Mediumkammer (29) unten angeordnet. Die Wärmetauscherflächen bestehen aus vertikalen Längsrippenrohren (91), welche am oberen Ende (33) geschlossen und unten gegen die Mediumkammer (29) offen sind. Im Innern der Längsrippenrohre (91) ist eine Mediumleitung (43) zum oberen Ende (33) geführt, über welche Wärmemedium in einem Rieselfilm durch die Kernrohre (39) der Längsrippenrohre (91) in die Mediumkammer (29) hinuntergelassen wird. Über dem die beiden Kammern trennenden nach oben gewölbten Behälterboden (25) ist ein Ablaufkanal (59) ausgebildet, indem auf Heizrohre (63) zum Abschmelzen des Einsatzgutes im Bereich des Ablaufkanals (59) ein Siebboden (61) aufgeschweisst ist. Die ablaufenden flüssigen Bestandteile werden in einem Ringkanal (65) aufgefangen und von dort abgelassen. Der Ringkanal (65) ist beheizt.

## Beschreibung

Die vorliegende Erfindung betrifft eine Vorrichtung zur Trennung eines Stoffgemisches mittels statischer, fraktionierter Kristallisation, mit einem Behälter zur Aufnahme des Stoffgemischs oder Einsatzgutes, mit vertikalen, über ein Wärmemedium kühl- und heizbaren Wärmetauscherflächen im Behälter, mit wenigstens je einem Einlass für das Einsatzgut und einem Auslass für daraus gewonnene Fraktionen und wenigstens je einem Ein- und Auslass für das Wärmemedium.

In statischen Kristallisatoren wurden ursprünglich Rohrbündel zur Kühlung der Schmelze und Heizen des Kristallisats verwendet. Später worden die Rohre durch vertikal und quer zu den Rohren ausgerichteten Lamellen hindurch geleitet, um die Kristallisations- und Wärmeaustauschflächen zu vergrössern. Die heute in der Industrie gebräuchlichsten Kristallisatoren für die statische Kristallisation sind sog. Plattenkristallisatoren, deren Wärmetauscherelemente doppelwandige Plattenelemente sind. Bei Plattenkristallisatoren sind eine Anzahl identischer Plattenelemente in einem kubischen Behälter angeordnet. Zwischen den beiden Wänden eines Plattenelementes zirkuliert die Wärmetauscherflüssigkeit und zwischen den Plattenelementen bzw. zwischen diesen und der Behälterwandung wird Einsatzgut eingefüllt und daraus an den Plattenelementen eine Kristallschicht auskristallisiert. Diese Plattenelemente sind jedoch teuer in der Herstellung und lediglich geeignet für kubische Behälter, da sie aus Kosten- und Steuerungsgründen vorzugsweise gleich sein sollten. Nachteilig an kubischen Behältern ist, dass sie gegen Druckunterschiede empfindlich sind, schlecht reinigbar sind und in Ecken und Kanten sich gerne Ablagerungen ansammeln.

Um einen runden Behälter ausreichend homogen mit Wärmetauscherflächen bestücken zu können, wird in der Europäischen Patentschrift 0 323 377 eine Doppelspirale aus zwei parallelen Platten als Wärmetauscherfläche vorgeschlagen. Durch die beiden parallelen und spiralig verlaufenden Platten wird einerseits eine doppelspiralförmige Raumschicht für das Wärmemedium und andererseits zwei spiralförmige Raumschichten für die Schmelze und das Kristallisat gebildet. Mehrere solche Kristallisationskammern werden übereinander angeordnet. Das Einsatzgut wird jeweils von unten eingefüllt und entleert. Das Wärmemedium wird spiralig von aussen nach innen geführt, um in umgekehrter Richtung drehend durch den zweiten Teil der Doppelspirale wieder von innen nach aussen geführt zu werden. Diese Wärmetauscher entsprechen, abgesehen von der spiraligen Verdrehung, einem Plattenelement eines Plattenkristallisators. Um die Wärmetauscherfläche zu vergrössern wird zudem vorgeschlagen, in den Zwischenräumen für die Schmelze Einbauten vorzusehen. Ein solcher Kristallisator ist sehr aufwendig in der Herstellung. Die Wärmetauscherflächen sind gegenüber denen in einem Plattenkristallisator nicht grösser.

In der EP-A 0 051 551 wird vorgeschlagen, in einem zylindrischen Kristallisatorgehäuse parallel zu der Zylinderachse Rohre in einem orthogonalen Raster anzuordnen und zwischen diesen Wärmetauscherrohren Platten, welche in thermischem Kontakt mit den Rohren stehen, anzuordnen. Diese Platten sollen die Wärme quer zu den Rohren verteilen und als Kristallisationsflächen dienen. Diese Platten stehen auf quer zu ihnen verlaufenden Trägern, welche zudem die Knicklänge der Rohre begrenzen. Die Platten weisen unterschiedliche Breiten, jedoch die gleiche Höhe auf, so dass ein zylindrischer Abschnitt mit zur Zylinderachse parallelen Platten zwischen den Rohren bestückt werden kann. Mehrere solcher Abschnitte sind übereinander angeordnet, und zwischen den Abschnitten ist mit einem Zwischenboden ein Ablauf für ablaufende Flüssigbestandteile vorgesehen.

Der Wärmeübergang zwischen den Rohren und den Platten ist nicht ideal, da sie nicht verschweisst sein können. Durch die Knicklänge der Rohre bedingt können die Platten in der Ablaufrichtung nicht durchgehend sein, wodurch die Ablaufkanäle für flüssige Phase immer wieder unterbrochen werden.

Es ist deshalb Aufgabe der Erfindung einen statischen Kristallisator vorzuschlagen, welcher die oben erwähnten Nachteile vermeidet, eine effiziente Wärmeübertragung zwischen Einsatzgut und Wärmemedium ermöglicht und dessen Wärmetauscherelemente kostengünstig hergestellt werden können, eine möglichst hohe Bauweise des Kristallisators erlauben und insbesondere einen Kristallisator vorzuschlagen, bei welchem mit gleichartigen Wärmetauscherelementen ein zylindrischer Behälter praktisch homogen ausgefüllt ist. Der Platzbedarf der gesamten Kristallisationsanlage soll zudem minimal sein.

Erfindungsgemäss wird dies dadurch erreicht, dass die Wärmetauscherflächen durch vertikal angeordnete Längsrippenrohre gebildet sind. Längsrippenrohre sind im Handel erhältliche Massenprodukte, welche für Wärmetauscher in einer Vielfalt von Variationen hergestellt werden. Sie weisen eine bis zu zwanzig mal grössere Oberfläche auf als Rohre ohne Rippen mit dem gleichen Umfang. Dank der Anordnung der Rippen parallel zu den Rohren liegen in einem mit senkrecht ausgerichteten Rohren bestückten Kristallisator lediglich senkrechte Flächen vor, was das Ablaufverhalten der Schmelze oder Mutterlauge günstig beeinflusst. Vorteilhaft für das Ablaufverhalten ist insbesondere, wenn die Rohre und die Rippen von Behälterbodennähe bis auf etwas über das Einfüllniveau des Behälters durchgehend sind. Dadurch entstehen beim Schwitzen oder Abschmelzen durchgehend senkrechte Ablaufkanäle, in denen ablaufende flüssige Phase rasch aus dem Kristallisatkuchen entweicht.

Vorteilhaft sind die Längsrippen am Rohr angeschweisst, um einen optimalen Wärmeübergang zu gewährleisten, und die Längsrippenrohre aus einem im Chemieanlagenbau gebräuchlichen nichtrostenden Stahl gefertigt.

Längsrippenrohre weisen eine sehr gute Tragfähigkeit auf. Die Knicklänge eines Rohres wird durch das Anbringen von Längsrippen wesentlich verlängert, so dass mit einem Längsrippenrohr hohe Lasten abgetragen werden können und daher hohe Kristallisatoren gebaut werden können, sofern das Eigengewicht des Kristallisats beim Schwitzen auf die Wärmetauscher übertragen werden kann.

Mit vertikal ausgerichteten Längsrippenrohren kann praktisch jede Querschnittform, insbesondere eine runde oder sechseckige, optimal ausgefüllt werden. Eine bevorzugte Querschnittform ist die runde. Eine runde Behälterwandung kann Druckunterschiede zwischen dem Behälter und der Umgebung besser aufnehmen als eine ebene. Dies ist umso notwendiger, je höher ein statischer Kristallisator ausgebildet ist, da zumindest beim Abschmelzen des Kristallisatkuchens die Drücke auf den untersten Teil der Wandung mit der Höhe des Kristallisator zunehmen. Ein zylindrischer Behälterraum weist überdies gegenüber einem kubischen Behälterraum ein günstigeres Verhältnis zwischen Oberfläche und Volumen auf, was sich wiederum positiv auf den Energiehaushalt beim Betreiben eines Kristallisators auswirkt. Eine runde Form weist keine Ecken auf, welche anfällig für Ablagerungen sind, was sich auch auf die Reinigung des Behälters auswirkt.

Vorteilhaft sind die Rippenrohre in einer Dreiecksanordnung mit konstanter Seitenlänge angeordnet. Die Dreiecksanordnung ist die dichteste Packung von runden Querschnitten. Dadurch ist der ganze Kristallisationsraum gleichmässig mit Wärmetauscherflächen bestückt, welche alle die identische Form haben können.

Vorteilhaft sind die Rippen gelocht. Dadurch wird die Haftung zwischen Kristallisat und Wärmetauscherfläche erhöht, da das Kristallisat diesseits und jenseits einer Rippe durch die Wärmetauscherfläche hindurch zusammenhängt. Das Kristallisat hält daher nicht nur über Reibung und Haftung, sondern es ist an der Wärmetauscherfläche aufgehängt und muss abgeschert werden, um abrutschen zu können. Daher können Kristallisatoren mit Längsrippenrohren, deren Rippen gelocht sind, für eine grössere Palette von Stoffgemischen eingesetzt werden als Plattenkristallisatoren.

Vorteilhaft weisen die Rippen Flächen auf, welche wesentlich von der Senkrechten abweichen oder in einem Winkel zur Fläche der Rippen stehen. Dies können beispielsweise Brauen an den Lochrändern oder aus der Fläche herausgebogene Teile der Rippen sein. Diese nicht vertikal verlaufenden Kanten und Flächen erhöhen die Scherkraft, welche notwendig ist, um das Kristallisat von den Rippen zu reissen. Vorteilhaft ist die notwendige Scherkraft zum Abscheren des Kristallisats zusammen mit der Haftung zwischen Kristallisat und Wärmetauscheroberfläche während des Schwitzens so hoch, dass das Kristallisat getragen wird. Dies ermöglicht es, den Kristallisator beliebig hoch zu bauen. Eine solche Anlage benötigt daher gegenüber herkömmlichen Anlagen weniger Grundfläche.

Vorteilhaft ist der Einlass als Verteiler zum Begiessen oder Besprühen der Wärmetauscherflächen ausgebildet und über den Wärmetauscherflächen angeordnet. Dadurch kann die Wärmetauscherfläche begossen werden und eine Flüssigkeit über dem Einsatzgut verteilt werden.

Vorteilhaft ist der Behälterboden gegen oben gewölbt. Ist der oberste Punkt der Wölbung etwa zentrisch, so läuft ablaufende Schmelze oder Mutterlauge gegen den Rand des Kristallisators. Bei einer runden Grundfläche des Behälters sind die Ablaufwege dadurch ideal. Je mehr Flüssigkeit anfällt, desto stärker geneigt ist die Bodenfläche und desto grösser ist auch die Fläche, über welche die Flüssigkeit ablaufen kann.

Vorteilhaft ist in einem Abstand über dem Behälterboden ein durchlässiger Gitterboden angeordnet. Dadurch ist ein Ablaufkanal, bzw. eine Ablaufschicht, definiert, und herunterfallende Kristallisatstücke können den Ablaufkanal nicht verstopfen. Vorteilhaft sind über dem Behälterboden Heizrohre angeordnet oder ist der Behälterboden heizbar. Dadurch kann der Ablaufkanal für abzulassende Mutterlauge oder Schmelze freigeschmolzen werden.

Vorteilhaft weist ein solcher Kristallisator einen beheizten Ringkanal zum Auffangen und dem Auslass Zuführen von abfliessenden Fraktionen oder abfliessender Mutterlauge auf, und vorteilhaft auch einen Ringkanal zum Verteilen und Sammeln eines den Behälterboden oder die über dem Behälterboden angeordneten Heizrohre aufheizenden Heizmediums. Die ringförmige Zu- und Wegführung verbindet in einfachster Weise eine Mehrzahl von Einzelleitungen oder einzelnen Austrittöffnungen. Vorteilhaft sind die Ringkanäle durch zwei etwa konzentrische Halbrohre gebildet und aussen auf der Behälterwandung angeordnet, wobei der Ringkanal für die flüssigen Bestandteile des Einsatzgutes innerhalb des Ringkanals für das Heizmedium angeordnet ist. Dadurch kann eine separate Beheizung des Ablaufkanals angeschlossen werden und die ablaufenden flüssigen Phasen können über die Schmelztemperatur aufgeheizt werden. So wird einer Erstarrung der flüssigen Phase vorgebeugt und die ablaufenden Phasen verflüssigt.

Vorteilhaft ist die Behälterwandung heiz- und kühlbar. Dadurch entstehen keine Temperaturunterschiede zwischen dem Zentrum und der Peripherie des Einsatzgutes.

Vorteilhaft ist weiter ein solcher Kristallisator über einem Tankturm angeordnet, wodurch der Platzbedarf bezüglich Aufstellfläche minimal ist. Der Tankturm besteht wenigstens aus einem Tank, welcher als vertikaler Zylinder ausgebildet ist, ist vorzugsweise aber mit Zwischenböden in verschiedene Tanks unterteilt. Die in den Tank einzufüllenden Flüssigkeiten sind vorteilhaft in Tanks gelagert, welche über einer Pumpe angeordnet sind. Dadurch können mit dieser einen Pumpe die verschiedenen Flüssigkeiten in den Kristallisator gepumpt werden. Ein solcher Tankturm ist in der gleichentags eingereichten schweizerischen Patentanmeldung im Detail beschrieben.

Nachfolgend werden Ausführungsbeispiele der Erfindung unter Bezugnahme auf die Figuren beschrieben. Es zeigt
- Fig. 1: einen Vertikalschnitt durch einen erfindungsgemässen Kristallisator,
- Fig. 2: einen Horizontalschnitt durch den Kristallisator gemäss Figur 1,
- Fig. 3: einen Detailschnitt durch zwei Längsrippenrohre,
- Fig. 4: einen Vertikalschnitt durch die Längsrippenrohre gemäss Figur 2 und den gewölbten Behälterboden des Kristallisators gemäss Figur 1,
- Fig. 5: einen Vertikalschnitt durch den Ringkanal des Kristallisators gemäss Figur 1,
- Fig. 6: einen Vertikalschnitt durch eine alternative Ausführung eines Ringkanals,
- Fig. 7: einen Kristallisationsturm aus einem Kristallisator 11 und einem Tankturm 101,
- Fig. 8: einen Ausschnitt aus einer Längsrippe 41/41' mit kreisrunden Löchern,
- Fig. 9: einen Ausschnitt aus einer Längsrippe 41/41' mit Längslöchern,
- Fig. 10: einen Schnitt durch eine Rippe mit vertikal abgebogenen Lochausschnitten,
- Fig. 11: eine Rippe mit Brauen um die Löcher,
- Fig. 12: eine Rippe mit einfachen Löchern,
- Fig. 13: eine Rippe mit horizontal oder geneigt abgebogenen Lochausschnitten.

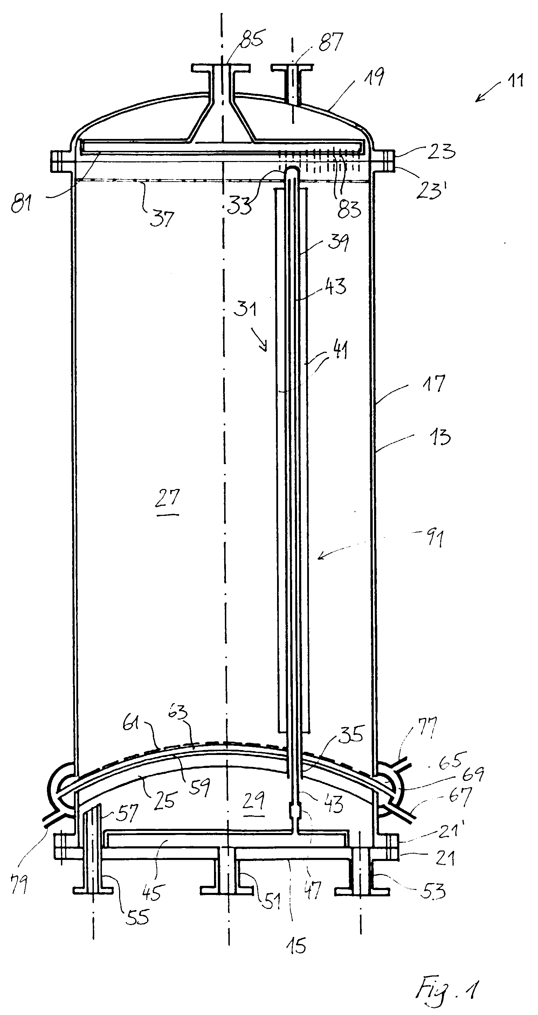

Der Kristallisator 11 nach Figur 1 weist ein Gehäuse 13 auf, welches aus einem Gehäuseboden 15, einer Gehäusewandung 17 und einem Gehäusedeckel 19 zusammengesetzt ist. Gehäuseboden 15 und Gehäusedeckel 19 sind über Flansche 21 bzw. 23 mit der Gehäusewandung 17 bzw. ihren Flanschen 21',23' lösbar verschraubt. Das Gehäuse 13 ist durch einen nach oben gewölbten Behälterboden 25 in zwei Kammern unterteilt, nämlich in eine obere Kristallisationskammer 27, welche als Behälter für ein Einsatzgut aus einem zu trennenden Stoffgemisch dient, und eine untere Mediumkammer 29, welche als Sammelraum für das abzuführende Wärmemedium dient. Durch Entfernen des Gehäusebodens 15 wird die Mediumkammer 29, und durch Entfernen des Behälter- oder Gehäusedeckels 19 wird die Kristallisationskammer 27 zugänglich.

Im Behälter für den durch statische Kristallisation zu trennenden Einsatzgut, bzw. in der Kristallisationskammer 27 sind eine Vielzahl von Wärmetauschern 31 angeordnet, von denen in Figur 1 lediglich einer dargestellt ist. Jeder Wärmetauscher 31 besteht aus einem Rohr 39, welches an seinem oberen Ende 33 verschlossen ist und mit seinem unteren Ende 35 durch den Behälterboden 25 hinab in die Mediumkammer 29 reicht. Das obere Ende 33 wird durch ein Gitter 37 gehalten, so dass das Rohr 39 sich seitlich nicht bewegen, wohl aber in der Länge ausdehnen und zusammenziehen kann. Der Rohrinnenraum ist gegen die Mediumkammer offen. Das Rohr 39 ist nahezu über seine ganze Länge mit durchgehenden Längsrippen 41 versehen. Im Innern des Rohres 39 ist eine Mediumleitung 43 hinauf zu seinem oberen Ende 33 geführt. Die Mediumleitungen 43 sind mit einer Verteilkammer 45 am Gehäuseboden 15 verbunden. Die Verbindung ist mit Steckverbindungen 47 hergestellt, welche beim Entfernen des Gehäusebodens 15 von den darin steckenden Mediumleitungen 43 gezogen werden.

Im Gehäuseboden sind drei Anschlussstutzen 51,53,55 vorgesehen. Der Stutzen 51 ist für das zuzuführende flüssige Wärmemedium, der Stutzen 53 für das abzuführende flüssige und gasförmige Wärmemedium und der Stutzen 55 für die Druckregulierung in der Mediumkammer 29 und den Rohren 39. Der Stutzen 55 zur Druckregulierung weist einen Rohrstumpf 57 auf, welcher über den Gehäuseboden 15 hinaufsteht und bis nahe an den Behälterboden 25 reicht, weil zur Druckregulation mit dem gasförmigem Wärmemedium gearbeitet wird.

Über dem gewölbten Behälterboden 25 ist ein Ablaufkanal 59 mit einem Siebboden 61 von der darüberliegenden Kristallisationskammer 27 abgetrennt. Zwischen Siebboden 61 und Behälterboden 25 sind im Ablaufkanal 59 Heizrohre 63 angeordnet. Der Ablaufkanal 59 ist mit einem ausserhalb der Gehäusewandung 17 angeordneten Ringkanal 65 für das Sammeln von ablaufender Flüssigkeit verbunden. Der Ringkanal 65 ist über einen Auslass 67 entleerbar.

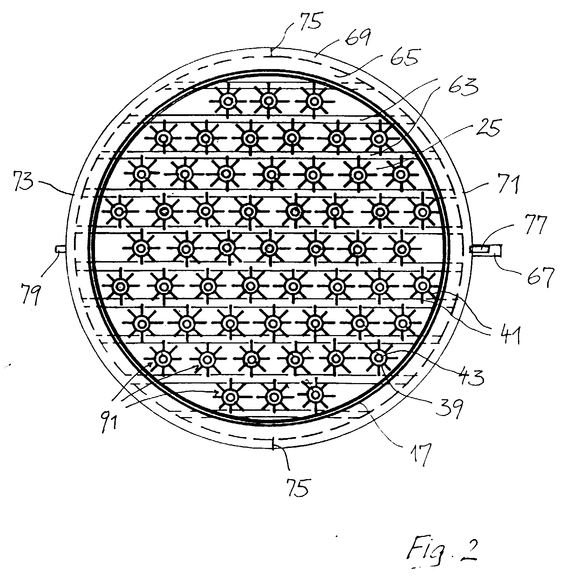

Konzentrisch um den Ringkanal 65 ist ein zweiter Ringkanal 69 angeordnet, mit welchem in einer Hälfte (Figur 2, 71) ein Heizmedium auf die Heizleitungen 63 verteilt und in der anderen Hälfte (Figur 2, 73) von diesen gesammelt wird. Der Ringkanal 69 ist dazu mit zwei Scheidewänden (Figur 2, 75) in zwei Hälften unterteilt. An diesem Ringkanal 69 sind eine Zuführungsleitung 79 und eine Rücklaufleitung 77 für das Heizmedium angeordnet.

Der Gehäusedeckel 19 ist gewölbt. Unter dem Gehäusedeckel 19 ist ein Verteilschild oder Verteiler 81 mit einer Vielzahl nach unten gerichteter Öffnungen 83 und einem Ringspalt zwischen Verteiler und Behälterwandung 17 bzw. Behälterdeckel 19 angeordnet. Über den Verteiler 81 wird die Kristallisationskammer mit Einsatzgut gefüllt. Im Gehäusedeckel 19 ist zudem eine Öffnung 87 vorgesehen, durch welche der Gasaustausch beim Befüllen oder Entleeren des Kristallisators stattfinden kann.

Figur 2 zeigt einen Horizontalschnitt durch die Kristallisationskammer 27. In der Kammer sind eine Vielzahl von Längsrippenrohren 91 in einem 60 Grad Raster angeordnet. Die schematisch eingezeichneten Rippen 41 stehen gleichmässig auf alle Seiten der Rohre 39 ab. Durch diese Anordnung der Längsrippenrohre 91 ist der Raum in viele vertikal durchgehende Kristallisationszonen unterteilt, deren Abmessungen in den horizontalen Richtungen relativ zur Höhenausdehnung sehr klein sind. Die Rippenanzahl kann so gross gewählt werden, dass die Kristallisatschicht beim Schwitzen genügend Haftung hat, um ihr Eigengewicht auf die Rippen und die Längsrippenrohre abzutragen. Das Gewicht des Kristallisats hängt daher an den Längsrippenrohren 91 und an der Gehäusewandung 17. Die Gehäusewandung ist nämlich, wenn dies auch nicht dargestellt ist, auch heiz- und kühlbar, und dient somit als Kristallisationsfläche.

Der über den Heizrohren 63 angeordnete Siebboden 61 ist in Figur 2 nicht dargestellt. Die Heizrohre 63 verlaufen über dem Behälterboden 25 geradlinig zwischen den Rohren 39 hindurch und enden beidseitig je in einem Verteil- 71 bzw. Sammelkanal 73. Diese bilden zusammen einen Ringkanal 69, welcher mit Scheidewänden 75 in zwei Teile unterteilt ist. Die Scheidewände 75 sind auf der senkrecht zu den Heizleitungen 63 ausgerichteten Linie durch den Mittelpunkt der Kristallisationskammer 27 angeordnet. Der Einlass 79 für das Heizmedium ist auf der Seite des Auslasses 67 für das Schmelzgut angeordnet. Innerhalb des Ringkanals 69 für das Heizmedium ist der Ringkanal 65 für das Schmelzgut oder die ablaufende Mutterlauge angeordnet.

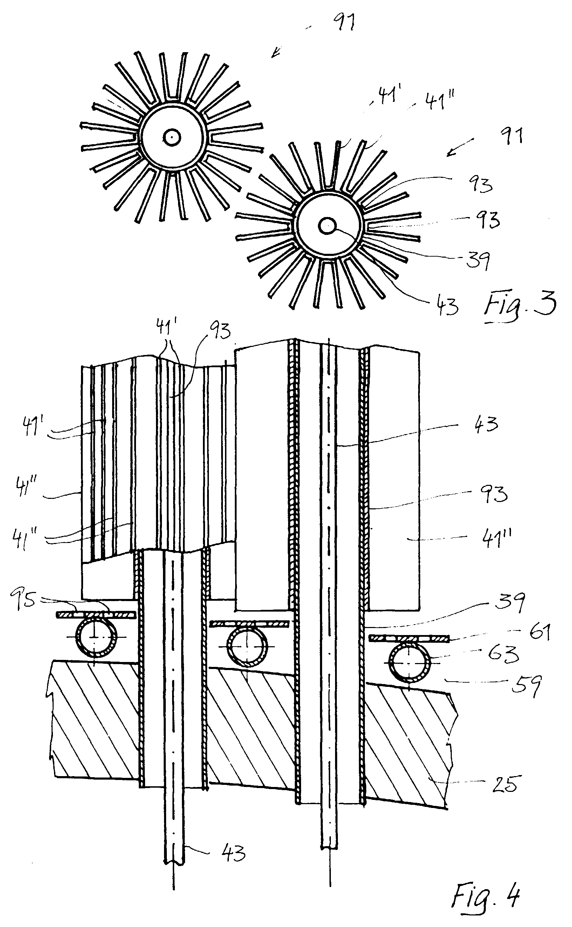

Figur 3 stellt einen Querschnitt durch zwei Längsrippenrohre 91 dar. Das Längsrippenrohr 91 ist aus einem Rohr 39 und einer geraden Anzahl Doppelrippen 41',41'' zusammengestellt. Die Doppelrippen 41 sind am Verbindungssteg 93 mit dem Rohr 39 zusammengeschweisst. In der in Figur 3 und 4 dargestellten Ausführungsvariante sind die Rippen verschieden lang. Jede zweite der 12 Doppelrippen 41',41'' ist länger als die andere ausgebildet, so dass die längeren Doppelrippen 41'' auf die Eckpunkte eines regelmässigen Sechseckes und die kürzeren Doppelrippen 41' auf die Seitenflächen des Sechseckes ausgerichtet sind. Dadurch füllen die Rippen 41',41'' bei Dreiecksanordnung der Längsrippenrohre 91 den Raum der Kristallisationskammer 27 optimal aus. Im Zentrum des Rohres 39 ist die Mediumleitung 43 angeordnet, durch welche das Wärmemedium an das obere Ende (Fig. 1, 33) des Längsrippenrohres 91 befördert wird, um es von dort in einem Rieselfilm an der Innenseite des Rohres 39 herunterrieseln zu lassen.

In Figur 4 ist diese Mediumleitung 43 geschnitten gezeichnet. Sie reicht unter das Rohr 39 hinab und ist mit der Verteilkammer (Fig. 1, 45) verbunden. Das Rohr 39 dagegen ist gegen die Mediumkammer (Fig. 1, 29) offen, so dass das Wärmemedium gasförmig und/oder flüssig nach dem Wärmeaustausch im Rohr 39 in die Mediumkammer 29 einfliesst. Das Rohr 39 sitzt im Behälterboden 25. Über dem Behälterboden ist zwischen dem Behälterboden 25 und dem Siebboden 61 ein Zwischenraum oder Ablaufkanal 59 abgetrennt. Der Siebboden 61 ist auf die Heizrohre 63 aufgeschweisst. Dadurch werden die Öffnungen 95 im Siebboden 61 freigeschmolzen, sobald die Heizrohre 63 aufgeheizt werden.

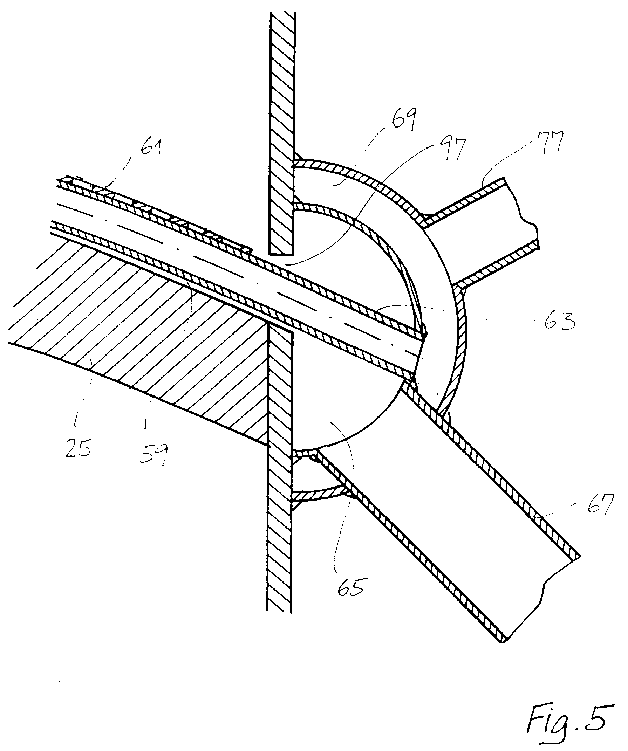

Figur 5 zeigt einen Detailschnitt durch die Ringkanäle 65 und 69 beim Auslass 67 für flüssige Bestandteile des Einsatzgutes. Die Heizleitungen 63 sind mit dem äusseren Ringkanal 69 verbunden. Zum Aufheizen des Ablaufkanals 59 wird entsprechend aufgeheiztes Heizmedium durch den Einlass 79 in den Ringkanal 69 und durch die Leitungen 63 gefördert. Dadurch verflüssigt sich im Zwischenraum 59 zwischen Siebboden 61 und Behälterboden 25 befindliches Kristallisat und fliesst, dank der Wölbung des Behälterbodens 25 gegen die Peripherie, durch die Öffnungen 97 und schliesslich in den Ringkanal 65. Von dort wird es durch den Auslass 67 abgeleitet. Die Heizrohre 63 heizen dabei nicht nur den Zwischenraum oder Ablaufkanal 59 auf, sondern auch den Ringkanal 65 und das darin befindliche Einsatzgut, da sie durch den inneren Ringkanal 65 hindurchgeführt sind und der äussere Ringkanal 69 den inneren Ringkanal 65 umfängt. Der Auslass 67 für flüssige Phasen ist am unteren Rand des halbrohrförmigen Ringkanals 65 angeordnet und nach unten gerichtet.

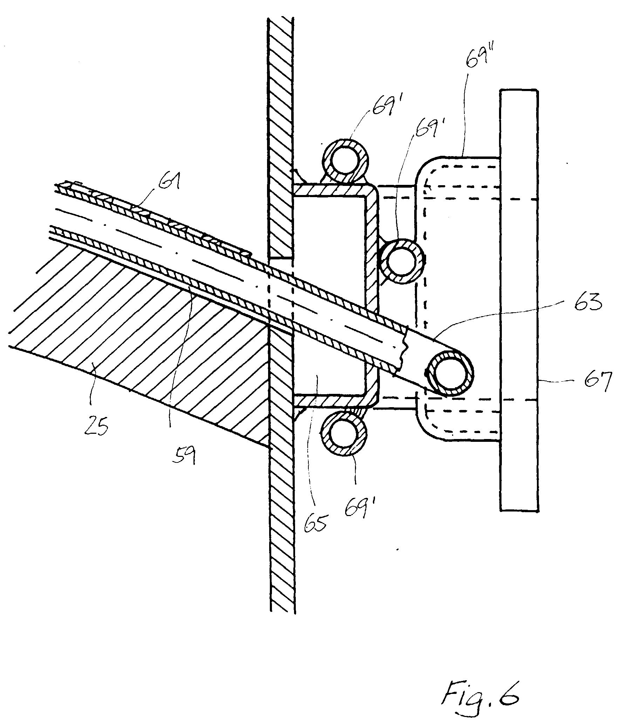

Figur 6 ist ein Detailschnitt durch eine alternative Ausführungsform des beheizten Ringkanals 65 aus Figur 5. Der Ringkanal 65 in Figur 6 ist durch Begleitheizungsrohre 69' geheizt, welche auf den Ringkanal 65 aufgeschweisst sind. Der Auslass 67 ist ebenfalls mit einer Begleitheizung in Form einer Manschette 69'' ausgerüstet. Die Heizrohre 63 für den Ablaufkanal 59 über dem Behälterboden 25 sind in einer Schlangenlinie hin und her durch den Behälter geführt. Sie durchkreuzen dabei immer wieder den Ringkanal 65. Bei dieser Ausführung sind sämtliche Schweissnähte zugänglich.

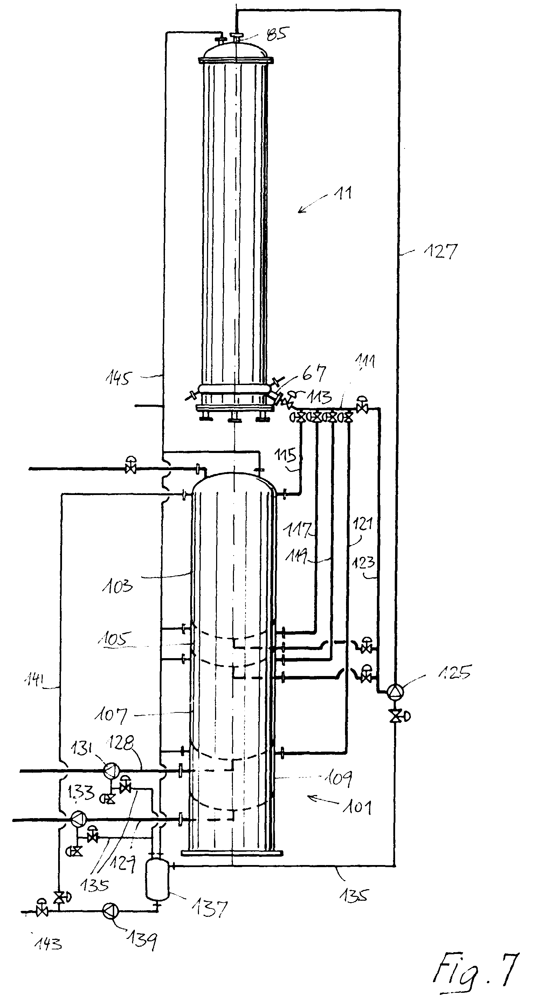

Fig. 7 zeigt eine bevorzugte Anordnung von Kristallisator 11 und Tankanlage 101. Ziel der Konstruktion des Kristallisators 11 ist unter anderem, möglichst wenig Stellfläche zu beanspruchen. Dieses Ziel auch auf die gesamte Kristallisationsanlage übertragend, sind die verschiedenen Tanks, zu einer vertikal aufgetürmten Einheit 101 zusammengefasst worden. Im Tankturm 101 ist ein Feedtank 103 zuoberst, darunter ein Waschflüssigkeittank 105, dann ein Produkttank 107 und zuunterst ein Rückstandtank 109 angeordnet. Dieser Tankturm 101 kann auch beispielsweise um Zwischenprodukttanks erweitert werden. Einzelne Zwischenböden trennen die unterschiedlichen Tanks.

Der Kristallisator 11 ist über dem Tankturm 101 angeordnet, so dass ablaufende Flüssigkeiten dank der Schwerkraft ohne Pumpen in die entsprechenden Tanks geleitet werden können. Dazu ist eine Verteilleitung 111 mit einem Schieber 113 am Auslass 67 angeschlossen, von welcher aus über je einen weiteren Schieber Leitungen 115,117,119,121 zu den verschieden Tanks 103,105,107,109 führen. Eine weitere Leitung 123 hinter einem weiteren Schieber verbindet die Verteilleitung 111 mit einer Pumpe 125. Von dort führt eine Leitung 127 zum Einlass 85 des Kristallisators 11.

Auslasse in den Tanks 103,105 für das Ausgangsprodukt und für die Waschflüssigkeit, und allenfalls in den Tanks für Zwischenprodukte, sind via je einen Schieber an die Leitung 123 angeschlossen, so dass diese Flüssigkeiten mit der Pumpe 125 in den Kristallisator 11 gepumpt werden können. Für das gereinigte Produkt und den Rückstand sind an den entsprechenden Tanks 107,109 je ein Auslass und daran eine Leitung 128,129 vorgesehen, welche an je eine separate Pumpe 131, 133 angeschlossen sind. Denn diese Flüssigkeiten brauchen nicht mehr in den Kristallisator 11 gepumpt werden, sondern werden weitergeleitet bzw. entsorgt.

Die Pumpen 125,131,133 sind an Entleerungsleitungen 135 angeschlossen, wodurch sie und die an ihnen angeschlossenen Leitungen 111,123,127,128,129 über Entleerungsleitungen 135 entleerbar sind. Die Entleerungsleitungen 135 sind in einen Entleerungstank 137 geführt, welcher über eine Pumpe 139 entweder über die Leitung 141 in den Feedtank 103 oder über die Leitung 143 aus dem System hinaus entleert werden kann.

Zum Ausgleich des Volumens in den Behältern 11,103,105,107,109,137, sind diese mit einer Leitung 145 verbunden, durch welche das in den Behältern vorliegende Gas, bzw. die Luft, von einem in den andern Behälter zirkuliert, wenn Flüssigkeit vom andern in den einen fliesst.

Zum Füllen des statischen Kristallisators 11 wird das Ausgangsprodukt, welches sich im Feedtank 103 angesammelt hat, mit der Pumpe 125 in den Kristallisator 11 gepumpt und die Kristallisationskammer 27 bis auf die Höhe der oberen Enden 33 der Längsrippenrohre 91 gefüllt. Durch den Verteiler 81 kann das Einsatzgut auf die gesamte Grundfläche des Kristallisators 11 verteilt werden, so dass es als Film über die gekühlten Längsrippenrohre 91 hinunterläuft und bereits während des Einfüllens eine erste Kristallschicht auskristallisiert. Nach dem Kristallisieren des in die Kristallisationskammer 27 gefüllten Einsatzgutes zu einem Kristallisatkuchen mit zwischen den Kristallen eingeschlossenen flüssigen höherschmelzenden Fraktionen wird der Zwischenraum 59 zwischen Behälterboden 25 und Siebboden 61 durch Aufheizen der Heizleitungen 63 freigeschmolzen. Das Schmelzgut wird in den Feedtank 103 geleitet. Die danach abfliessende flüssig gebliebene Mutterlauge wird in den Rückstandtank 109 ablaufen gelassen. Zum Waschen wird mit einer im Tank 105 gelagerten Waschflüssigkeit, welche mit der Pumpe 125 über das Kristallisat hinaufgepumpt und mit dem Verteiler 81 verteilt wird, von Restmengen der im Kristallisat verbliebenen Flüssigbestandteile gereinigt. Durch die kleine Grundfläche bei grosser Höhe des Kristallisatvolumens wird relativ wenig Waschflüssigkeit benötigt, weil die Waschflüssigkeit einen langen Weg durch das Kristallisat zurücklegt. Die Waschflüssigkeit läuft dann in den Feedtank 103 ab.

Beim Schwitzen des Kristallisats wird, wie allgemein bei der statischen fraktionierten Kristallisation üblich, das Produkt gereinigt, indem höherschmelzende Fraktionen abgeschmolzen werden. Diese Fraktionen werden in den Feedtank 103 zurückgeleitet.

Sowohl beim Waschen als auch beim Schwitzen bleiben kleinere Mengen von Flüssigbestandteilen durch die Kapillarwirkung der kleinen Zwischenräume zwischen den Kristallen im Kristallgefüge hängen. Dies aber vorwiegend im untersten Bereich. Je höher oben man im Kristallisat nachschaut, desto weniger Flüssigbestandteile können festgestellt werden. Je höher der Kristallisatkuchen ist, desto kleiner ist demnach die durchschnittliche Verschmutzung des Kristallisats aufgrund dieser Kapillarwirkung.

Beim Abschmelzen des reinen Kristallisats wird das Kristallisat stark aufgeheizt. Dadurch schmelzen die Kristalle rasch ab, die Kristallschichten lösen sich von den Wärmetauscherflächen 91 und fallen zu Boden. Damit am Boden keine Verstopfung entsteht, wird über dem Boden mit den Heizleitungen 63 geheizt. Dadurch ruht das weiche Kristallisat auf dem Siebboden 61. Unter dem Siebboden ist ein Ablaufkanal freigeschmolzen. Ablaufende flüssige Phase des Kristallisats wird im Kreislauf mit der Pumpe 125 wieder von oben in den Kristallisator 11 gefüllt, wo es über die Längsrippenrohre 91 hinunterläuft. Dabei wird es zusätzlich aufgewärmt und führt die Wärme von den über das Kristallisat hinaufragenden Wärmetauscherflächen 91 ab. Die aufgewärmte Schmelze dringt dann durch das Kristallisat und schmilzt dieses. Dadurch kann sehr rasch abgeschmolzen werden, weil das Kristallisat von geheizter Flüssigkeit umgeben ist und die Wärmetauscherflächen mit ihrer ganzen Höhe wirksam sind. Sobald alles abgeschmolzen ist, wird zuerst der Waschflüssigkeittank 105 neu gefüllt und den Rest der Schmelze in den Produkttank 107 abgelassen.

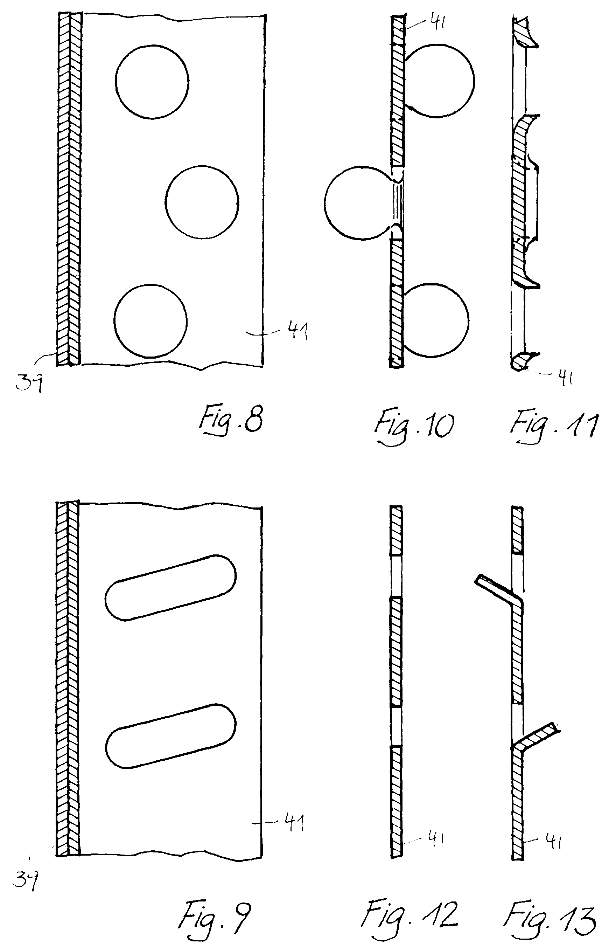

In den Figuren 8 bis 13 sind Ausführungsbeispiele für Lochungen an den Längsrippen 41,41' dargestellt. Figuren 8 und 9 sind Ansichten der Rippen 41, wobei das Rohr 39 und der Verbindungssteg 93 der Doppelrippen geschnitten ist, Figuren 10 bis 13 stellen vertikale Schnitte durch die Lochungen dar. Die Lochung kann kreisrund, wie in Figur 8 dargestellt, mit Langlöchern, wie in Figur 9 dargestellt, oder auch mit Löchern verschiedenster anderer Formen ausgeführt werden. Die Löcher können in der Vertikalen verschoben (Fig. 8) oder senkrecht untereinander (Fig. 9) angeordnet sein. Auch die Grösse der Löcher kann unterschiedlich sein. Um keine Wärmetauscherfläche zu verlieren kann das ausgestanzte oder ausgefräste Blechstück an einem Rand mit der Rippe verbunden bleiben. Dies ist in Figur 10 und 13 dargestellt. Dabei kann die Verbindung über einen seitlichen (Fig. 10) oder einen unteren (Fig. 13) oder einen oberen Rand bestehen bleiben. Je nach Lage der Verbindung wird auch die Biegeachse horizontal, geneigt oder vertikal (Fig. 10) verlaufen. Wenn beispielsweise ein länglicher Lochausschnitt gemäss Figur 9 umgebogen wird wie in Figur 13, sind die geneigten Flächen sowohl gegen die Rippe 41 hin als auch gegen das Rohr 39 hin geneigt.

Eine sehr einfache Ausführung ist in Figur 12 dargestellt, bei der die Lochung ausgestanzt ist und die Rippe 41 beidseitig eben ist. Durch eine entsprechende Abänderung des Stanzwerkzeugs kann mit dem Ausstanzen gleichzeitig eine Braue, wie dies in Figur 11 dargestellt ist, aufgebogen werden. Alle diese und diesen ähnliche Massnahmen dienen dazu, den Halt der Kristallschicht an der Wärmetauscherfläche zu erhöhen, so dass das Kristallisat beim Schwitzen nicht abrutscht.

## Patentansprüche

1. Vorrichtung zur Trennung eines Stoffgemisches mittels statischer, fraktionierter Kristallisation, mit einem Behälter (27) zur Aufnahme des Stoffgemischs oder Einsatzgutes, mit vertikalen, über ein Wärmemedium kühl- und heizbaren Wärmetauscherflächen (39,41) im Behälter (27), mit wenigstens je einem Einlass (85) für das Einsatzgut und einem Auslass (67) für daraus gewonnene Fraktionen, mit wenigstens je einem Einlass (51) und Auslass (53) für das Wärmemedium, dadurch gekennzeichnet, dass die Wärmetauscherflächen durch vertikal angeordnete Längsrippenrohre (91) gebildet sind.

2. Vorrichtung nach Anspruch 1, dadurch gekennzeichnet, dass die Rohre (39) und die Rippen (41,41',41'') von Behälterbodennähe bis auf etwas über das Einfüllniveau des Behälters (27) durchgehend sind.

3. Vorrichtung nach Anspruch 1 oder 2, dadurch gekennzeichnet, dass die Rippen (41,41',41'') gelocht sind.

4. Vorrichtung nach einem der Ansprüche 1 bis 3, dadurch gekennzeichnet, dass die Rippen (41,41',41'') Flächen aufweisen, welche wesentlich von der Senkrechten abweichen.

5. Vorrichtung nach einem der Ansprüche 1 bis 4, dadurch gekennzeichnet, dass der Einlass (85) als Verteiler (81) zum Begiessen oder Besprühen der Wärmetauscherflächen (39,41,41',41'') ausgebildet ist.

6. Vorrichtung nach einem der Ansprüche 1 bis 5, dadurch gekennzeichnet, dass der Behälterboden (25) gegen Innen gewölbt ist.

7. Vorrichtung nach einem der Ansprüche 1 bis 6, dadurch gekennzeichnet, dass in einem Abstand über dem Behälterboden (25) ein durchlässiger Siebboden (61) angeordnet ist.

8. Vorrichtung nach einem der Ansprüche 1 bis 7, dadurch gekennzeichnet, dass über dem Behälterboden (25) Heizrohre (63) angeordnet sind oder der Behälterboden (25) heizbar ist.

9. Vorrichtung nach einem der Ansprüche 1 bis 8, gekennzeichnet durch einen beheizten Ringkanal (65) zum Auffangen und dem Auslass (67) Zuführen von abfliessenden Fraktionen oder abfliessender Mutterlauge.

10. Vorrichtung nach Anspruch 8 oder 9, gekennzeichnet durch einen Ringkanal (69) zum Verteilen und Sammeln eines den Behälterboden (25) oder die über dem Behälterboden (25) angeordneten Heizrohre (63) aufheizenden Heizmediums.

11. Vorrichtung nach den Ansprüchen 9 und 10, dadurch gekennzeichnet, dass die Ringkanäle (65,69) durch zwei etwa konzentrische Halbrohre gebildet und aussen auf der Behälterwandung (17) angeordnet sind, wobei der Ringkanal (65) für die flüssigen Bestandteile des Einsatzgutes innerhalb des Ringkanals (69) für das Heizmedium angeordnet ist.

12. Vorrichtung nach einem der Ansprüche 1 bis 11, dadurch gekennzeichnet, dass der Behälter (27) zylindrisch ist.

13. Vorrichtung nach einem der Ansprüche 1 bis 12, bei welcher der Kristallisator (11) angeschlossen ist an einen oder mehrere Tanks zur Aufbewahrung von Ausgangsprodukt, Zwischenprodukt, Endprodukt, Waschflüssigkeit und/oder Rückstand, dadurch gekennzeichnet, dass mehrere Tanks zu einem zylindrischen Körper zusammengefasst sind, welcher durch Zwischenböden in verschiedene Tanks unterteilt und unter dem Kristallisator angeordnet ist.

14. Vorrichtung nach Anspruch 13, dadurch gekennzeichnet, dass eine einzige Pumpe zum Einfüllen von Flüssigkeit in den Kristallisator unterhalb des untersten der Tanks vorgesehen ist, in welchen Flüssigkeit gelagert wird, welche in den Kristallisator eingefüllt werden können muss.
